Europäisches Patentamt

European Patent Office

Office européen des brevets

(19)

(11) Veröffentlichungsnummer : **0 008 067**
**B2**

# NEUE EUROPÄISCHE PATENTSCHRIFT

(12)

(45) Veröffentlichungstag der neuen Patentschrift :
18.06.86

(21) Anmeldenummer : 79102730.3

(22) Anmeldetag : 31.07.79

(51) Int. Cl.⁴ : **H 04 Q 11/04, H 04 Q 3/54**

(54) **Indirekt gesteuerte, mit Zeitkanalkopplern ausgerüstete Fernmeldevermittlungsanlage, insbesondere Fernsprechvermittlungsanlage.**

(30) Priorität : 09.08.78 DE 2834938

(43) Veröffentlichungstag der Anmeldung :
20.02.80 Patentblatt 80/04

(45) Bekanntmachung des Hinweises auf die Patenterteilung : 05.01.83 Patentblatt 83/01

(45) Bekanntmachung des Hinweises auf die Entscheidung über den Einspruch : 18.06.86 Patentblatt 86/25

(84) Benannte Vertragsstaaten :
AT CH DE FR GB IT NL SE

(56) Entgegenhaltungen :
DE-A- 2 317 400
DE-A- 2 517 525
DE-A- 2 526 115
DE-A- 2 748 580
FR-A- 2 298 915
LU-A-   67 356
US-A- 4 127 742
INTERNATIONAL SWITCHING SYMPOSIUM, oktober 25-29, 1976 KYOTO JP SKAPERDA: "Generic digital switching system", Seiten 233-4-1 bis 223-4-8
EUROCON'77-CONFERENCE PROCEEDINGS ON COMMUNICATIONS, Mai 3-7, 1977 Venezia IT LORENZINI et al: "Dedicated microcomputers as signalling preprocessors in Proteo Tandem Exchange", Seiten 3.5.3.1 - 3.5.3.6
1978 INTERNATIONAL ZURICH SEMINAR ON DIGITAL COMMUNICATIONS, 7-9 März 1978 Zürich CH BARTH et al.: "A Digital PABX System with improved flexibility", Seiten B5.1 - B5.6.
1978 INTERNATIONAL CONFERENCE ON COMMUNICATIONS, Band 2, Juni 4-7, 1978 Toronto CA CESARATTO et al.: "DMS-200 Control Structure", Seiten 32.2.1. - 32.2.5
TELCOM REPORT, Band 2, Heft 3, März 1979 Berlin DE SUCKFULL: "Architektur einer neuen Linie digitaler öffentlicher Fernsprechvermittlungen", Seiten 174-183

(73) Patentinhaber : Siemens Aktiengesellschaft
Berlin und München Wittelsbacherplatz 2
D-8000 München 2 (DE)

(72) Erfinder : Müller, Helmut, Dipl.-Ing.
Meisenweg 3
D-8033 Planegg (DE)
Erfinder : von Ow, Hans Peter, Dr.
Starnbergerstrasse 11
D-8000 München 71 (DE)
Erfinder : Paulmichl, Erich, Dipl.-Ing.
Am Würmufer 9
D-8035 Gauting (DE)
Erfinder : Rambold, Thomas, Dipl.-Ing.
Guardinistrasse 139
D-8000 München 70 (DE)
Erfinder : Stürner, Lienhard, Dipl.-Ing.
Richard-Strauss-Strasse 17 b
D-8033 Planegg (DE)
Erfinder : Werres, Bernhard, Dipl.-Ing.
Benediktenwand 23
D-8000 München 90 (DE)

EP 0 008 067 B2

**Beschreibung**

Es ist üblich, in Vermittlungsanlagen mehrere Einrichtungen nacheinander auf anstehende Informationen nach dem sogenannten Abfrageprinzip abzufragen (siehe P. Gerke : « Rechnergesteuerte Vermittlungsanlagen », 1972, Seiten 116 bis 121). Hierbei werden vor allem Änderungen des Betriebszustandes dieser Einrichtungen für ihre Auswertung erfaßt. Die Abfrageinformationen werden dann mit früheren Abfrageinformationen, die von derselben Einrichtung stammen, zur Auswertung verglichen. Abhängig von den Vergleichsergebnissen werden dann Betriebsvorgänge in der Vermittlungsanlage abgewicklet (siehe DE-OS 14 37 576, 23 17 400 ; DE-PS 12 13 008). Bei solchen Vermittlungsanlagen wird das Abfragen der Einrichtungen direkt mit der Auswertung der erhaltenen Abfrageinformationen verbunden, es wird also jeweils zwischen dem Abfragen zweier verschiedener Einrichtungen der Vergleich aufeinanderfolgender Abfrageinformationen derselben Einrichtung vorgenommen und daraufhin beispielsweise fallweise die Adresse einer Einrichtung abgespeichert, bei der sich der Betriebszustand geändert hat, was sich aufgrund veränderter Abfrageinformationen ergeben hat (siehe DE-PS 12 13 008). Es ist auch bekannt, gegebenenfalls das Abfragen zu unterbrechen, um jeweils die erforderlichen Betriebsvorgänge abzuwickeln, die sich auf die Änderung des Betriebszustandes der abgefragten Einrichtung, beispielsweise einer Teilnehmerschaltung, anzuschließen haben (siehe DE-OS 14 37 576, Seite 74).

In jedem Fall empfiehlt es sich, eine weitere Verarbeitung aufgrund von Abfrageinformationen im Steuerwerk nur dann durchzuführen, wenn es sich um veränderte Informationen handelt. Hierzu kann eine Schaltungsanordnung verwendet werden, mit deren Hilfe regelmäßig in bestimmten Zeitabständen die betreffenden Einrichtungen abgefragt werden, aufeinanderfolgende Informationen, die von derselben Einrichtung stammen, miteinander verglichen werden und dann bei Vorliegen von Änderungen Meldungen an ein Steuerwerk geliefert werden (siehe DE-OS 23 17 400).

Die Erfindung betrifft nun eine indirekt gesteuerte, mit Zeitkanalkopplern ausgerüstete Fernmeldevermittlungsanlage, insbesondere Fernsprechvermittlungsanlage, mit einem Steuerwerk, für das von mehreren anderen Schalteinrichtungen stammende Informationen regelmäßig in bestimmten Zeitabständen für ihre weitere Verarbeitung aufgenommen werden, wozu die Informationen zunächst in einem Pufferspeicherplätze in Zuordnung zu den Schalteinrichtungen aufweisenden pufferspeicher gespeichert und aufeinanderfolgende Informationen, die von derselben Schalteinrichtung stammen, miteinander verglichen werden, bevor aufgrund von Informationsänderungen Informationen vom Steuerwerk aus dem Pufferspeicher abgeholt und weiter verarbeitet werden.

Eine ähnliche Fernmeldevermittlungsanlage ist in der deutschen Auslegeschrift 2 602 561 beschrieben. Hierin ist lediglich nicht angegeben, daß Zeitkanalkoppler vorgesehen sind. Der Erfindung liegt die Aufgabe zugrunde, eine Schaltungsanordnung anzugeben, welche ermöglicht, ein Steuerwerk durch Verarbeitungsvorgänge aufgrund von Informationen, die von mehreren Schalteinrichtungen stammen, möglichst wenig in Anspruch zu nehmen. Diese möglichst geringe Inanspruchnahme betrifft in der Hauptsache die zeitliche Dringlichkeit, die sich hinsichtlich der weiteren Verarbeitung von Informationen durch dieses Steuerwerk auf dasselbe richtet. Ferner soll durch die Erfindung angegeben werden, wie in den angegebenen Zusammenhängen zu benutzende Speicher in zweckmäßiger Weise aufgebaut und betrieben werden müssen. Der Schwerpunkt der erfindungsgemäßen Aufgabe liegt darin, das Steuerwerk hinsichtlich der Dringlichkeit anfallender Informationsverarbeitungsvorgänge so weit wie möglich zu entlasten.

Die Erfindung löst die gestellte Aufgabe dadurch, daß von den in zeitlich verschachtelten und den Schalteinrichtungen individuell zugeordneten Zeitkanälen anstehenden Informationen jeweils eine von einem Register aufgenommen und dann einem Vergleicher zugeführt wird, daß hierbei von einem der jeweils betreffenden Schalteinrichtung individuell zugeordneten Speicherplatz des Pufferspeichers die bisher dort gespeicherte entsprechende Information abgelesen wird und ebenfalls dem Vergleicher zugeführt wird, daß bei Ungleichheit dieser beiden Informationen der Vergleicher sowohl die Einspeicherung der im Register enthaltenen Information in den zuvor jeweils abgelesenen Speicherplatz des Pufferspeichers anstelle der dabei erhaltenen Information als auch die Einspeicherung einer diese Ungleichheit anzeigenden Ein-Bit-Information jeweils an einer von einer Reihe von Speicherstellen bewirkt, die individuell den Speicherplätzen des Pufferspeichers zugeordnet sind, daß ein Leitwerk des Steuerwerks entsprechend dem Arbeitsrhythmus des letzteren und nur in Pausen zwischen derartigen Einspeicherungsvorgängen Informationen, die im Pufferspeicher enthalten sind und soweit sier durch die Ein-Bit-Informationen markiert sind, vom Pufferspeicher unter Löschung der jeweiligen Ein-Bit-Information mit Hilfe von Pufferspeicherplatzadressen abholt und einem Arbeitsspeicher des Steuerwerks eingibt, und daß die bei der Abholung zu benutzenden Pufferspeicherplatzadressen mit Hilfe eines Umsetzers aus Adressen von bei der Eingabe in den Arbeitsspeicher zu benutzenden Arbeitsspeicherplatzadressen umgesetzt werden.

Dadurch, daß die betreffenden Informationen vom Leitwerk, statt dorthin gemeldet zu werden, entsprechend seinem Arbeitsrhythmus zur Weiterverarbeitung abgeholt werden, ergibt sich zawangsläufig, daß Störungen seines Betriebes durch zu schnell hintereinander eintreffende Informationen vermieden werden. Solche Informationen werden mit Hilfe der vorgesehenen Speichertechnik von der Weiterverarbeitung abgehalten. Dabei werden insbesondere belanglose Informationen abgehalten, nämlich solche, die sich von vorhergehenden entsprechenden Informationen nicht unterscheiden. Mit dem Eintreffen solcher Informationen ist insbesondere dann zu rechnen, wenn die Informationen zweckmäßigerweise zur Erhöhung der Übertragungssicherheit jeweils mehrfach wiederholt werden. Gemäß den erfindungsgemäßen Maßnahmen wird dann aber bei der Erfassung dieser Informationen die Anzahl der vom Steuerwerk zu verarbeitenden Informationen verringert. Für diese Maßnahmen ist nur eine verhältnismäßig geringe Speicherkapazität erforderlich, da je Zeitkanal nur ein Speicherplatz erforderlich ist und da zur Markierung der vom Steuerwerk abzuholenden Informationen lediglich Einbit-Informationen verwendet werden und da schließlich auch die Einspeicherung von Adressen, welche die Quellen der abzuholenden Informationen angeben, eingespart ist. Dies ist auch der Fall, wenn das Steuerwerk als zentrales Steuerwerk über Zeichenkanäle mit mehreren dezentralen Steuerwerken verbunden ist, von denen her die zu erfassenden Informationen eintreffen.

Beispiele für die erfindungsgemäßen Maßnahmen bei einer Vermittlungsanlage und für die Arbeitsweise der betroffenen Teileinrichtungen werden im folgenden anhand der Figuren näher erläutert.

Figur 1 zeigt die Gliederung einer infrage kommenden Fernsprechvermittlungsanlage mit Zeitkanalkopplern.

Figur 2 zeigt eine Schaltungsanordnung mit den zur Zwischenspeicherung und Gewinnung von weiterzuverarbeitenden Informationen erforderlichen Speichern und sonstigen Einrichtungen.

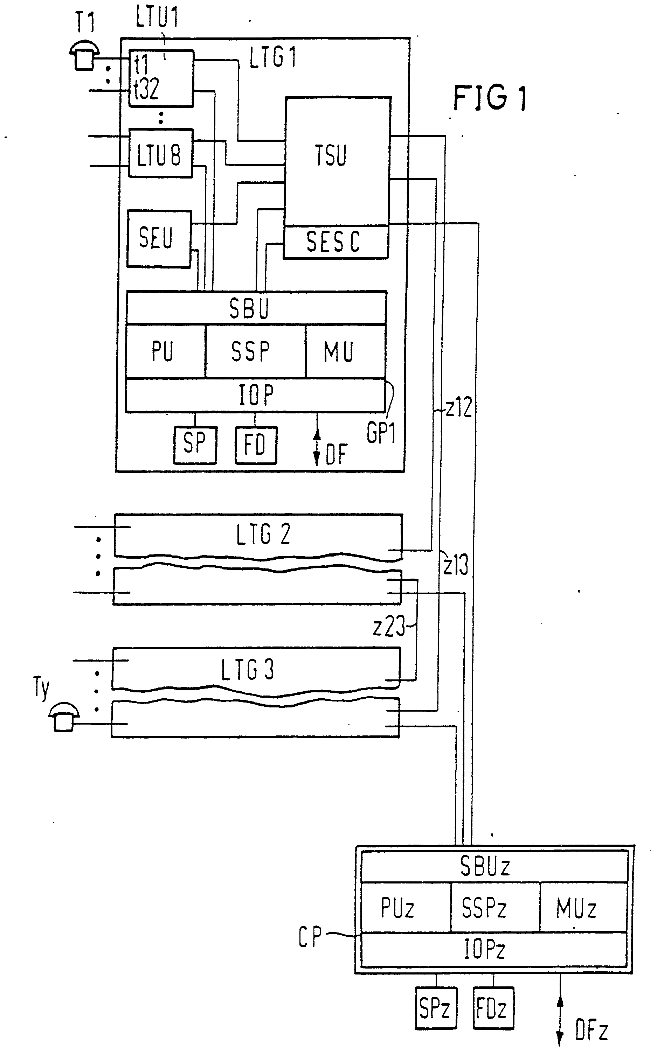

Zu der in Figur 1 gezeigten Vermittlungsanlage gehören die Anlagenteile LTG1, LTG2 und LTG3, an die einerseits die Teilnehmerstellen T1 ... Ty und andererseits über Steuerleitungen das zentrale Steuerwerk CP angeschlossen sind. Die verschiedenen Anlagenteile sind noch untereinander über die Zwischenleitungen z12, z13 und z234 verbunden. Jeder Anlagenteil hat ein eigenes dezentrales Steuerwerk. So hat der Anlagenteil LTG1 das dezentrale Stuerwerk GP1. Zu diesem Anlagenteil gehört ferner der Zeitkanalkoppler TSU, der mit der Kopplersteuerung SESC ausgerüstet ist. Die Kopplersteuerung SESC bekommt Einstellbefehle vom dezentralen Steuerwerk GP1. Die Teilnehmerstelle T1 ist bei dem Anlagenteil LTG1 über die Teilnehmeranschlußschaltung t1 und über weitere Schaltungen an den Zeitkanalkoppler TSU angeschlossen. Die Teilnehmeranschlußschaltungen sind hier zu Mehrfachanschlußschaltungen gruppenweise zusammenfaßt. So sind die Teilnehmeranschlußschaltungen t1 ... t32 zur Mehrfachanschlußschaltung LTU1 zusammengefaßt. Es sind bei dem Anlagenteil LTG1 mehrere Mehrfachanschlußschaltungen vorgesehen, zu denen auch noch die Mehrfachanschlußschaltung LTU8 gehört. Es können auch entsprechende Mehrfachanschlußschaltungen vorgesehen sein, bei denen mehrere Verbindungsleitungsanschlußschaltungen zusammengefaßt sind, an die Verbindungsleitungen angeschlossen sind, die beispielsweise zu anderen Vermittlungsanlagen führen. An den Zeitkanalkoppler TSU ist ferner die Signalschaltung SEU angeschlossen, in der Tongenerator, Rufgenerator, Codesender- und -empfänger zusammengefaßt sind. Diese Signalschaltung kann demgemäß die verschiedenen Hörtöne sowie Rufzeichen und sonstigen benötigte Codezeichen liefern. Außerdem kann sie solche Zeichen auch für ihre Auswertung empfangen. Die Teilnehmeranschlußschaltungen t1 ... t32 und die weiteren sowie die Signalschaltung SEU sind an das Steuerwerk GP1 und an den Zeitkanalkoppler TSU angeschlossen. Diese Einrichtungen können daher über den Zeitkanalkoppler TSU fallweise miteinander verbunden werden.

Außerdem können diese Einrichtungen auch Steuerinformationen mit dem Steuerwerk GP1 austauschen, und zwar über den zugehörigen Informationspuffer SBU, mit dessen Hilfe ein störender Zeitzwang dabei vermieden wird. Zu diesem Steuerwerk gehört noch das Leitwerk SSP, das Verarbeitungswerk PU, der Arbeitsspeicher MU und die Ein-Ausgabesteuerung IOP, an die noch der Hintergrundspeicher FD und das Bedienungsgerät SP angeschlossen sind. Dort ist noch der Datenfernübertragungsanschluß DF vorgesehen, über den gegebenenfalls mit anderen Vermittlungen Steuerdaten ausgetauscht werden können. Die in der Figur 1 gezeigten Anlagenteile LTG1, LTG2 und LTG3 sind in allen Kombinationen über die Zwischenleitung z12, z13 und z23 verbunden, über die Zeitkanäle geführt sind. Außerdem sind die zugehörigen dezentralen Steuerwerke, wie das Steuerwerk GP1, mit dem entsprechend aufgebauten zentralen Steuerwerk CP verbunden.

Dieses zentrale Steuerwerk wirkt beim Aufbau und Abbau von Verbindungswegen mit, die über mindestens zwei der Anlagenteile LTG1, LTG2 und LTG3 führen. Dabei veranlaßt das zentrale Steuerwerk CP außerdem, daß die anderen Steuerwerke für den Aufbau und Abbau von Verbindungswegen sinngemäß in Anspruch genommen werden, wozu zwischen diesen Steuerwerken Steuerinformationen ausgetauscht werden. Zum zentralen Steuerwerk CP gehören der Informationspuffer SBUz, das Leitwerk SSPz, das Verarbeitungswerk PUz, der Speicher MUz und die Ein-Ausgabesteuerung IOPz, an die der Hintergrundspeicher FDz und das Bedienungsgerät SPz angeschlossen sind. Außerdem ist dort noch der Datenfernübertragungsanschluß DFz vorgesehen. Die dezentralen Steuerwerke, wie das Steuerwerk GP1, wickeln in jedem Fall solche Vermittlungsfunktionen ab, die für jede Verbindungsanforderung anfallen und die unter Zeitzwang stehen. Dazu gehören das Abfragen von Teilnehmerschaltungen, die Verarbeitung von Vermittlungsinformationen, die insbesondere von Teilnehmerschaltungen oder über Verbindungsleitungen geliefert werden, die Gebührenerfassung, wobei z. B. Gebührenimpulse gezählt werden, und die Lieferung von Einstellbefehlen für die Kopplersteuerung. Das zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen und die Leitweglenkung.

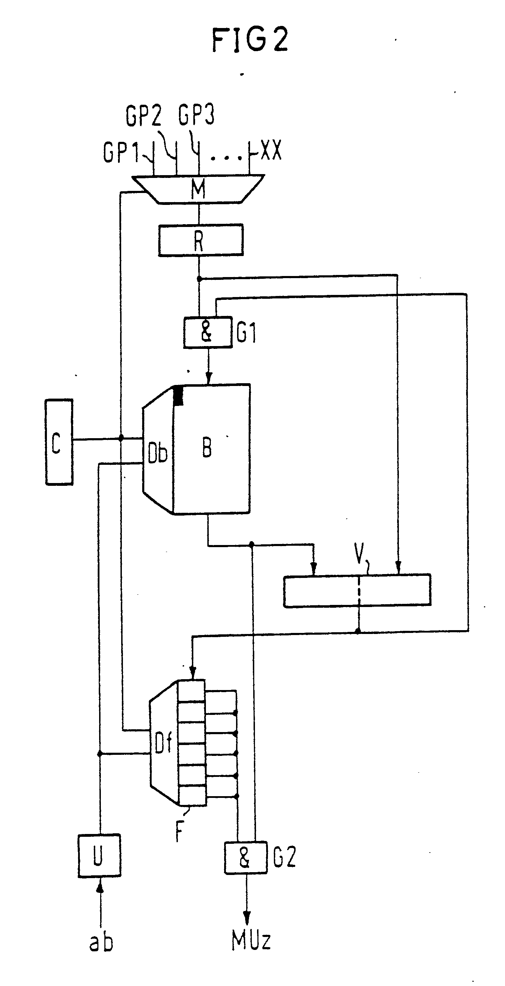

In der Figur 2 sind die Schaltungsteile des Informationspuffers SBUz gezeigt, die zur Aufnahme von Informationen dienen, die von den dezentralen Steuerwerken GP1 ... stammen. Diese Informationen können über einzelne Leitungen, welche Zeitkanäle aufweisen, können aber auch über eine Sammelleitung mit mehreren Zeitkanälen übertragen werden. Zwischen die erwähnten Steuerwerke und das Register R ist der Multiplexer M zwischengeschaltet, der die Informationen in Zeitkanälen nacheinander zum Register R weitergibt. Der Multiplexer M setzt also in an sich bekannter Weise im Zeitmultiplexverfahren in einer gewissen Anzahl von Kanälen ankommende Informationen auf eine geringere Anzahl von Kanälen um, hier auf einen einzigen Zeitkanal, der zum Register R führt. Hierbei ermöglicht der Multiplexer auch das zyklische Erfassen von Informationen von den erwähnten Steuerwerken. Es ist dies in der Figur 2 dadurch angedeutet, daß dort zum Multiplexer M mehrere Linien führen, die mit dementsphrechenden Hinweiszeichen versehen sind, also mit den Hinweiszeichen GP1, GP2, GP3. Das Hinweiszeichen XX soll andeuten, daß auch noch von anderen Einrichtungen stammende Informationen erfaßbar sind. Die jeweils anstehenden Informationen können byteweise gegliedert sein und werden dann auch byteweise von Multiplexer M zum Register R weitergegeben. Dabei kann das Register die Informationen byteweise seriell aufnehmen und byteweise parallel zu jeweils einem Speicherplatz des an ihn angeschlossenen Pufferspeichers B weitergeben. Das Register R dient dann zugleich zur Serien-Parallel-Umsetzung von Informationen. Es ist hier nun noch der Adressenzähler C vorgesehen, der mit dem Pufferspeicher B und mit dem Multiplexer M verbunden ist und der die Speicherplätze des Pufferspeichers zyklisch wiederholt zur Einspeicherung von Informationen ansteuert und außerdem den Multiplexer zur Lieferung von Informationen veranlaßt, die in den den aufgerufenen Speicherplätzen des Pufferspeichers B entsprechenden Zeitkanälan anstehen. Der Adressenzähler liefert also die Adressen der Speicherplätze des Pufferspeichers B, die für die Ansteuerung noch durch den Decoder Db decodiert werden. Außerdem steuert er hier das dem Aufruhen von Speicherplätzen entsprechende zeitgerechte Erfassen der über die verschiedenen Zeitkanäle übertragenen Informationen. Dadurch ist sichergestellt, daß die Informationen richtig im Zyklus zu den Speicherplätzen des Pufferspeichers B kommen können, die den verschiedenen Zeitkanälen entsphrechen. In den Speicherplätzen vorher enthaltene Informationen werden dabei ersetzt. Jedoch wird nicht jede vom Register R zunächst aufgenommene Information zu einem Speicherplatz des Pufferspeichers B weitergegeben. Hierbei hat der Vergleicher V mitzuwirken, der an den Pufferspeicher B und an das Register R angeschlossen ist. Bei Ansteuerung eines Speicherplatzes des Pufferspeichers B durch den Adressenzähler C wird die dort bereits enthaltene Information und außerdem die jeweils im Register R enthaltene Information dem Vergleicher V zum Vergleich zugeführt. Nur bei Ungleichheit dieser Informationen liefert der Vergleicher V eine Steuerinformation, die zu dem UND-Glied G1 gelangt. Dieses UND-Glied ist in die vom Register R zum Pufferspeicher B führende Leitung eingefügt. Vom Register R kann daher eine Information nur dann zu diesem Speicher gelangen, wenn der Vergleicher V eine Steuerinformation liefert. Das UND-Glied G1 ist hier derart ausgebildet, daß es jeweils eine ein Byte umfassende Information weitergeben kann.

Mit Hilfe der vom Adressenzähler C gelieferten Adressen werden auch die Speicherstellen für die Einbit-Informationen aufgerufen. Hierzu ist der Adressenzähler C auch mit dem Decoder Df verbunden, an den die Speicherstellen für die Einbit-Informationen in Form von Kippschaltungen F angeschlossen sind. Diese Kippschaltungen sind auch mit dem Vergleicher V verbunden, so daß sie durch die vom Vergleicher gelieferten Einbit-Informationen gegebenenfalls eingestellt werden können. Die im Pufferspeicher B enthaltenen Informationen sind Dann durch eine Markierung ergänzt, welche angibt, ob sie im Zuge des Aufnehmens von Informationen über den Multiplexer M verändert worden sind.

Das Leitwerk SSPz des Steuerwerks CP holt entsprechend seinem Arbeitsrhythmus die markierten Informationen ab. Dazu werden von ihm Adressen zum Umsetzer U über die Leitung ab geschickt. Dies sind Adressen von Speicherplätzen des Arbeitsspeichers MUz des Steuerwerks CP, in welche die abgeholten Informationen zunächst eingefespeichert werden. Mit Hilfe des Umsetzers U werden diese Adressen in die Adressen der Speicherplätze des Pufferspeichers B umgesetzt. Diese Adressen werden dann den Decodern Db und Df zugeführt, wodurch die Speicherplätze des Pufferspeichers B angesteuert werden und zugleich werden auch die jeweils zugeordneten Kippschaltungen F angesteuert. Das Leitwerk SSPz des Steuerwerks CP liefert also unmittelbar die Speicherplatzadressen der zur Speicherung der Informationen zu benutzenden Speicherplätze des Arbeitsspeichers MUz des Steuerwerks CP. Diese Speicherplatzadressen der Speicherplätze des Arbeitsspeichers werden mit Hilfe des Umsetzers U in Speicherplatzadressen des Pufferspeichers B umgesetzt. Dadurch ist eine gleichzeitige Anseuerung von einander entsprechenden Speicherplätzen einerseits im Arbeitsspeicher MUz und andererseits im Pufferspeicher B gewährleistet. Der Umsetzer U gibt dadurch also die Möglichkeit, daß anstelle der den Speicherplätzen des Pufferspeichers B zugeordneten Speicherplatzadressen, die den verschiedenen dezentralen Steuerwerken (GP1, ...) der verschiedenen Anlagenteile (LTG1, LTG2, LTG3) entsprechen (wobei die diesbezügliche Speicherplatzorganisation dem Ordnungsschema dieser im Patentanspruch 1 als « Schalteinrichtungen » bezeichneten dezentralen Steuerwerke und somit der Aufeinanderfolge der Zeitlagen der in FIG 2 angedeuteten Zeitkanäle entsprechen mag), Speicherplatzadressen zur Einspeicherung der Informationen im Arbeitsspeicher MUz zu verwenden, die den in Zusammenhang mit diesem abzuwickelnden Arbeitsvorgängen adäquat sind.

Bei der gleichzeitigen Ansteuerung von Speicherplätzen im Pufferspeicher und im Arbeitsspeicher aus dem Pufferspeicher B gelieferten Informationen werden über das UND-Glied G2 weitergegeben, sofern sogleich auch von den Kippschaltungen F Ein-Bit-Informationen geliefert werden. Andernfalls werden Informationen zum Arbeitsspeicher MUz des Steuerwerks CP nicht geschickt. Die Kippschaltungen werden beim Ansteuern rückgestellt, so daß jede Information nur einmal zum Arbeitsspeicher MUz geschickt wird. Die im Pufferspeicher B enthaltenen Informationen werden dagegen bei dessen Ansteuerung über den Umsetzer U nicht gelöscht. Der Pufferspeicher B wird mittels der vom Umsetzer U gelieferten Adressen nach deren Decodierung zweckmäßigerweise während Weiterzählpausen des Adressenzählers C angesteuert. Dies kann z. B. mit Hilfe einer gemeinsamen Taktsteuerung zustande gebracht werden, welche ermöglicht, daß zwischen das Weiterzählen das Abholen von Informationen eingefügt wird.

Gemäß den vorstehend beschriebenen Maßnahmen wird erreicht, daß von den jeweils mehrfach wiederholt geschickten Informationen vom Leitwerk SSPz des Steuerwerks CP nur diejenigen abgeholt werden, die für die weitere Verarbeitung von Belang sind. Die Einrichtungen zur Verarbeitung von Informationen in dem zentralen Steuerwerk CP werden daher nicht stärker als sonst belastet, wenn die Informationen zur Erhöhung der Übertragungssicherheit über die Zeichenkanäle jeweils mehrfach wiederholt geschickt werden. Die Zeichenkanäle zwischen dem zentralen Steuerwerk CP und den dezentralen Steuerwerken, wie dem Steuerwerk GP1, werden zweckmäßigerweise über jeweils einen vom betreffenden dezentralen Steuerwerk gesteuerten Zeitkanalkoppler, wie dem Zeitkanalkoppler TSU, geführt. Informationen, die über den Informationspuffer SBUz an dezentrale Steuerwerke und an dezentrale Steuerwerke und an andere Einrichtungen zu liefern sind, könen dorthin über hier nicht gezeigte Schaltungsteile des Informationspuffers SBUz geschickt werden.

**Patentansprüche**

1. Indirekt gesteuerte, mit Zeitkanalkopplern ausgerüstete Fernmeldevermittlungsanlage, insbesondere Fernsprechvermittlungsanlage, mit einem Steuerwerk (CP), für das von mehreren anderen Schalteinrichtungen (GP1, ...) stammende Informationen regelmäßig in bestimmten Zeitabständen für ihre weitere Verarbeitung aufgenommen werden, wozu die Informationen zunächst in einem Pufferspeicherplätze in Zuordnung zu den Schalteinrichtungen (GP1, ...) aufweisenden Pufferspeicher (B) gespeichert und aufeinanderfolgende Informationen, die von derselben Schalteinrichtung (GP1, ...) stammen, miteinander verglichen werden, bevor aufgrund von Informationsänderungen Informationen vom Steuerwerk (CP) aus dem Pufferspeicher (B) abgeholt und weiter verarbeitet werden, dadurch gekennzeichnet, daß von den in zeitlich verschachtelten und den Schalteinrichtungen (GP1, ...) individuell zugeordneten Zeitkanälen anstehenden Informationen jeweils einen von einem Register (R) aufgenommen und dann einem Vergleicher (V) zugeführt wird, daß hierbei von einem der der jeweils betreffenden Schalteinrichtung (GP1, ...) individuell zugeordneten Speicherplatz des Pufferspeichers (B) die bisher dort gespeicherte entsprechende Information abgelesen wird und ebenfalls dem Vergleicher (V) zugeführt wird, daß bei Ungleichheit dieser beiden Informationen der Vergleicher (V) sowohl die Einspeicherung der im Register (R) enthaltenen Information in den zuvor jeweils abgelesenen Speicherplatz des Pufferspeichers (B) anstelle der dabei erhaltenen Information als auch die Einspeicherung einer diese Ungleichheit anzeigenden Ein-Bit-Information jeweils an einer von einer Reihe von Speicherstellen (F) bewirkt, die individuell den Speicherplätzen des Pufferspeichers (B) zugeordnet sind, daß ein Leitwerk (SSPz) des Steuerwerks (CP) entsprechend dem Arbeitsrhythmus des letzteren und nur in Pausen zwischen derartigen Einspeicherungsvorgängen Informationen, die im Pufferspeicher (B) enthalten sind und soweit sie durch die Ein-Bit-Informationen markiert sind, vom Pufferspeicher (B) unter Löschung der jeweiligen Ein-Bit-Information mit Hilfe von Pufferspeicherplatzadressen abholt und einem Arbeitsspeicher (MUz) des Steuerwerks (CP) eingibt, und daß die bei der Abholung zu benutzenden Pufferspeicherplatzadressen mit Hilfe eines Umsetzers (U) aus Adressen von bei der Eingabe in den Arbeitsspeicher (MUz) zu benutzenden. Arbeitsspeicherplatzadressen umgesetzt werden.

2. Fernmeldevermittlungsanlage nach Anspruch 1, dadurch gekennzeichnet, daß zwischen die schalteinrichtungen (GP1, ...) und das Register (R) ein Multiplexer (M) zwischengeschaltet ist, der die Informationen Zeitkanälen entsprechend nacheinander zum Register (R) weitergibt.

3. Fernmeldevermittlungsanlage nach Anspruch 2, dadurch gekennzeichnet, daß das Register (R) die Informationen byteweise serielle aufnimmt und byteweise parallel zu je einem Speicherplatz des Pufferspeichers (B) weitergibt.

4. Fernmeldevermittlungsanlage nach Anspruch 2 oder 3, dadurch gekennzeichnet, daß ein Adressenzähler (C) vorgesehen ist, der mit dem Pufferspeicher (B) und mit dem Multiplexer (M) verbunden ist und der die Speicherplätze des Pufferspeichers (B) zyklisch wiederholt zur Einspeicherung von Informationen ansteuert und den Multiplexer (M) zur Lieferung von Informationen veranlaßt, die in den den aufgerufenen Speicherplätzen entsprechenden Zeitkanälen jeweils anstehen.

5. Fernmeldevermittlungsanlage nach Anspruch 4, dadurch gekennzeichnet, daß der Vergleicher (V) an den Pufferspeicher (B) und an das Register (R) angeschlossen ist und daß ihm bei Ansteuerung eines Speicherplatzes die dort bereits enthaltene Information und die jeweils im Register (R) enthaltene Information zum Vergleich zugeführt werden.

6. Fernmeldevermittlungsanlage nach Anspruch 4, oder 5, dadurch gekennzeichnet, daß als Speicherstellen für die Einbit-Informationen Kippschaltungen (F) vorgesehen sind, die über einen Decoder (Df) vom Adressenzähler (C) mit angesteuert werden und dabei gegebenenfalls durch die vom Vergleicher gelieferten Einbit-Informationen eingestellt werden.

7. Fernmeldevermittlungsanlage nach Anspruch 6, dadurch gekennzeichnet, daß die Kippschaltungen (F) und der Pufferspeicher (B) mittels der vom Umsetzer (U) gelieferten Adressen nach deren Dekodierung während Weiterzählpausen des Adressenzählers (C) angesteuert werden.

## Claims

1. Indirectly controlled telecommunications exchange system equipped with time channel couplers, in particular a telephone exchange system comprising a control unit (CP) for which items of information emanating from a plurality of other switching devices (GP1, ...) are regularly received at specific intervals of time for further processing, for which purpose the items of information are firstly stored in a buffer store (B) which comprises buffer store positions in assignment to the switching devices (GP1, ...) and consecutive items of information which emanate from the same switching device (GP1, ...) are compared with one another before items of information are fetched from the buffer store by the control unit (CP) and are further processed on the basis of changes in the items of information, characterised in that, of the items of information which overlap in time and which are individually assigned to the switching devices (GP1, ...) in each case one is received by a register (R) and then fed to a comparator (V), that the corresponding items of information previously stored in a store position of the buffer store (B) individually assigned to the relevant switching device (GP1, ...) is read-out therefrom and likewise fed to the comparator (V), that in the event that these two items of information are not identical the comparator (V) causes the information contained in the register (R) to be input into the previously read-out store position of the buffer store (B) in place of the stored information, and likewise causes a one-bit item of information indicating this non-identity to be input into one of a series of store positions (F) which are individually assigned to the store positions of the buffer store (B), that in accordance with the operating rhythm of the control unit (CP) and only during intervals between input operations of this kind a control component (SSPz) of the control unit (CP) obtains from the buffer store (B) items of information which are contained in said buffer store, where these are marked by the one-bit-items of information, simultaneously erasing the one-bit item of information in question with the aid of buffer store addresses, which items of information are fed to a working store (MUz) of the control unit (CP), and that the buffer store position addresses which are to be used during this acquisition process are converted by means of a converter (U) from addresses of working store position addresses to be used during the input into the working store (MUz).

2. Telecommunications exchange system as claimed in claim 1, characterised in that between the switching devices (GP1, ...) and the register (R) there is connected a multiplexer (M) which forwards the items of information consecutively in accordance with time channels to the register (R).

3. Telecommunications exchange system as claimed in claim 2, characterised in that the register (R) receives the items of information byte-wise in serial fashion and forwards the items of information byte-wise in parallel to a respective store position of the buffer store (B).

4. Telecommunications exchange system as claimed in claim 2 or 3, characterised in that an address counter (C) is provided which is connected to the buffer store (B) and to the multiplexer (M) and which operates the store positions of the buffer store (B) in a cyclic repetition for the input items of information and causes the multiplexer (M) to supply items of information which are respectively available in the time channels which correspond to the called-up store positions.

5. Telecommunications exchange system as claimed in claim 4, characterised in that the buffer (V) is connected to the buffer store (B) and to the register (R) and that it is supplied, when a store position is operated, with the items of information already contained therein and with the information contained in the register (R) for comparison purposes.

6. Telecommunications exchange system as claimed in claim 4 or 5, characterised in that the store positions for the one-bit items of information consist flip-flops (F) which are additionally operated via a decoder (Df) by the address counter (C) and are adjusted, if need be, by the one-bit items of information supplied by the comparator.

7. Telecommunications exchange system as claimed in claim 6, characterised in that the flip-flops (F) and the buffer store (B) are operated by means of the addresses supplied by the converter (U) following the decoding thereof during counting intervals of the address counter (C).

## Revendications

1. Installation de commutation pour télécommunications, notamment installation de commutation téléphonique, à coupleurs d'intervalles de temps et à commande indirecte, avec une unité de commande (CP) pour laquelle plusieurs informations provenant de plusieurs autres installations de commutation (GP1, ...) sont prises en charge régulièrement et à des intervalles de temps déterminés pour leur post-traitement, ce pourquoi les informations sont d'abord mémorisées dans une mémoire tampon (B) comportant des emplacements de mémoire coordonnés aux installations de commutation (GP1, ...), alors que des informations successives qui proviennent d'une même installation de commutation (GP1, ...) sont comparées entre elles, avant que des informations soient prélevées dans la mémoire tampon (B) et traitées, par suite de changements d'informations, caractérisée par le fait que parmi les informations qui sont présentes dans des intervalles de temps imbriqués dans le temps et associés individuellement aux installations de commutation (GP1, ...), une est prise en charge par un registre (R) et est appliquée ensuite à un comparateur (V), que ce faisant, d'un emplacement de la mémoire tampon associé à l'installation de commutation associée, est lue l'information correspondante qui y était mémorisée jusque-là et est également appliquée au comparateur (V), qu'en cas d'inégalité entre ces deux informations, le comparateur (V) provoque aussi bien la mémorisation de l'information contenue dans le registre (R), dans l'emplacement de mémorisation de la mémoire tampon (B) qui a été lu précédemment, à la place de l'information qui, ce faisant, est obtenue, que la mémorisation d'une information de un bit indiquant l'inégalité, dans l'un d'une série d'emplacements de mémoire (F) qui sont associés individuellement aux emplacements de la mémoire tampon (B), qu'un organe de commande (SSPz) de l'unité de commande (CP) prélève, en fonction du rythme de travail de cette dernière et seulement pendant des intervalles entre de telles opérations de mémorisation, des informations qui sont contenues dans la mémoire tampon (B) et, dans la mesure où elles sont marquées par les informations à un bit, de la mémoire tampon (B) avec effacement de l'information à un bit concernée, à l'aide d'adresses d'emplacements de la mémoire tampon, pour les introduire dans une mémoire de travail (MUz) de l'unité de commande (CP), et que les adresses d'emplacements de la mémoire tampon à utiliser lors du prélèvement sont, à l'aide d'un convertisseur, converties à partir d'adresses d'emplacements de la mémoire de travail, à utiliser pendant l'introduction dans le mémoire de travail (MUz).

2. Installation de commutation pour télécommunications selon la revendication 1, caractérisée par le fait qu'entre les installations de commutation (GP1, ...) et le registre (R) est inséré un multiplexeur (M) qui transmet les informations successivement et selon les intervalles de temps, au registre (R).

3. Installation de commutation pour télécommunications selon la revendication 2, caractérisée par le fait que le registre (R) prend en charge de façon sérielle et octet par octet et les transmet en parallèle et octet par octet respectivement à un emplacement de mémoire de la mémoire tampon.

4. Installation de commutation pour télécommunications selon la revendication 2 ou 3, caractérisée par le fait qu'il est prévu un compteur d'adresses (C) qui est relié à la mémoire tampon (B) et au multiplexeur (M) et qui attaque les emplacements de mémoire de la mémoire tampon (B) cycliquement et de façon répétitive pour la mémorisation d'informations et qui commande le multiplexeur (M) pour fournir des informations qui sont présentes respectivement dans les intervalles de temps qui correspondent aux emplacements de mémoire appelés.

5. Installation de commutation pour télécommunications selon la revendication 4, caractérisée par le fait que le comparateur (V) est relié à la mémoire tampon (B) et au registre (R) et qu'on lui applique, pour comparaison, et lorsque un emplacement de mémoire est attaqué, l'information qui est déjà contenue et l'information respective qui est contenue dans le registre (R).

6. Installation de commutation pour télécommunications selon la revendication 4 ou 5, caractérisée par le fait qu'il est prévu comme emplacement de mémoire pour les informations à un bit, des circuits à bascule qui, par l'intermédiaire d'un décodeur (Df) sont attaqués en même temps par le compteur d'adresses (C) et qui sont éventuellement réglés par l'information à un bit fournie par le comparateur.

7. Installation de commutation pour télécommunications selon la revendication 6, caractérisée par le fait que des circuits à bascule (F) et la mémoire tampon (B) sont attaqués à l'aide d'adresses fournies par le convertisseur (U), après leur décodage, pendant des intervalles entre comptages progressifs du compteur d'adresses (C).

FIG 1

FIG 2